# EUROPEAN PATENT APPLICATION

(11) **EP 2 332 861 A1**
(43) Date of publication of application: **15.06.2011**
(21) Application number: 09178898.4
(22) Date of filing: 11.12.2009
(51) Int. Cl.: B65G 15/00, B65G 23/44

(54) **Tightening and releasing device for conveying belts**

(71) Applicant: Vila Torra, Cecilia, 08251 Santpedor (ES)
(72) Inventor: Vila Torra, Cecilia, 08251 Santpedor (ES)
(74) Representative: Carpintero Lopez, Francisco

(57) **Abstract**

Device for tightening and releasing conveyor belts (1) made up of a frame (2) which comprises two end roller tracks, one motorized and the other driven (3), whereon the conveyor belt (1) slides, duly guided by means of a peripheral protuberance (4) disposed on one of the ends of the conveyor belt (1), whose tightening and releasing device comprises a set of manual actuation levers (6a,6b), articulated from their ends to each one of the sides of the frame at a point situated underneath the respective ends of the driven roller axle (8), whose levers act on the respective ends of the driven roller axle, through mobile supports (9a,9b) designed to slide horizontally.

## Description

### OBJECT OF THE INVENTION

The main object of the present invention is a device for tightening and releasing conveyor belts of those used for the movement of merchandise from one point to another, which facilitates the operation of replacing and tightening the conveyor belt.

The tightening device for conveyor belts object of the invention comprises a level mechanism which actuates on the end roller track of the conveyor belt.

### BACKGROUND OF THE INVENTION

The movement of transfer of the goods, such as packages, sacks or cases, from one point to another, is carried out by means of conveyor belts which configure a route, with straight spans and curved spans, from the starting point to the destination point.

These types of conveyor belts are normally used in facilities, such as airports or logistics centres, wherein they are in constant operation, so that managing their maintenance and breakdown repair has to be very quick in order to reduce the stoppage time of the conveyor line.

One of the components which requires a greater control and surveillance is the conveyor belt, which due to its nature must be regularly tightened. On the other hand, the conveyor belt is also subject to wear and tear, so the tightening device must permit the replacement operation thereof.

The conveyor belts currently existing on the market comprise a frame equipped with four legs and two end roller tracks, whereon the conveyor belt slides. Of the two rollers, one is connected to an activation motor for the movement of the conveyor belt, and the other rotates freely driven by the conveyor belt.

The tightening devices currently known on the market actuate on the ends of the driven roller, by means of screws which transversally attack the end supports of the roller axle, moving it longitudinally, in order to tighten the conveyor belt. Said screws are threaded on their respective nuts, which are fastened to the frame of the conveyor belt, at a point close to the axle of the driven roller, and in a radial position parallel to the conveyor belt.

The tightening of conveyor belts by means of threaded screws which actuate transversally on the ends of the driven roller, generally tend to be complicated, given that their handling is hindered by other components of the conveyor belt. Therefore, the rotational freedom of the corresponding key inserted in the screw head is very limited. All of this translates into a laborious and slow operation which delays the start-up of the conveyor belt.

In the event that the conveyor belt has to be replaced, due to breakage or deterioration thereof, the time used is even greater, given that it is necessary to show all of the components which surround the driven roller axle and loosen the tightening screw to proceed with the removal of the roller.

### DESCRIPTION OF THE INVENTION

The device for tightening and releasing conveyor belts proposed by the invention resolves the previously mentioned problem, as it permits the tightening of the conveyor belt in a fast and simple manner, even without stopping the operation thereof, while in turn allowing for an easy slackening and removal of the conveyor belt in the event of replacement thereof.

To do that, and more specifically, the device for tightening and releasing conveyor belts made up of a frame equipped with two end roller tracks, one motorized and the other driven, whereon the conveyor belt slides, duly guided by means of a peripheral protuberance disposed on one of the ends of the belt, in the case of curved belts, comprises a set of manual actuation levers, articulated from their ends to each one of the sides of the frame, at a point situated underneath the respective ends of the driven roller axle, whose levers actuate on the ends of the driven roller axle, through their mobile supports which are designed to slide horizontally. In this manner, manually actuating the respective levers, we will push the driven roller outwards, tightening the conveyor belt.

In order to fasten the driven roller in a tightened position of the conveyor belt, the mobile supports of the ends of the roller axle, comprise at least two tightening screws for fastening the supports against the frame, whose screws are disposed in transversal position with respect to the frame for their easy handling from the exterior.

On the other hand, in order not to hinder the removal of the conveyor belt, the articulated levers are removable. Likewise, the articulation axles of the levers can comprise a ratchet to prevent the backward movement of the lever during the tightening operation.

The removal of the conveyor belt, given the configuration of the frame, particularly in curved spans, is carried out from the interior part, so the mobile support of the interior end of the driven axle, in order not to hinder the lateral removal of the conveyor belt, is made up of a piece equipped with an orifice provided with a bearing at its end whereon the lower end of the driven roller axle is coupled, having provided for the disposition of two elongated orifices, wherein both tightening screws actuate on the frame for the horizontal movement and fastening of the mobile support. The smaller size and geometric configuration of the interior mobile support do not hinder the removal of the conveyor belt.

The mobile support of the exterior end of the driven roller axle is made up by an oval piece equipped with a central orifice provided with a bearing whereon is coupled the exterior end of the driven roller axle, having provided for the disposition of two end orifices, whereon operate tightening screws which both move on horizontal slots made in the frame, for the horizontal movement and fastening of the mobile support.

The articulated levers comprise a curved span, of curvature combined with the curvature of the contact area of the mobile support, in order to reduce friction as much as possible and to facilitate the horizontal movement.

### DESCRIPTION OF THE DRAWINGS

In order to complement the description being carried out and with the object of helping towards a better understanding of the characteristics of the invention, in accordance with a preferred example of embodiment thereof, a set of drawings has been attached as an integral part of said description wherein the following, in an illustrative and non/limitative character, has been represented:

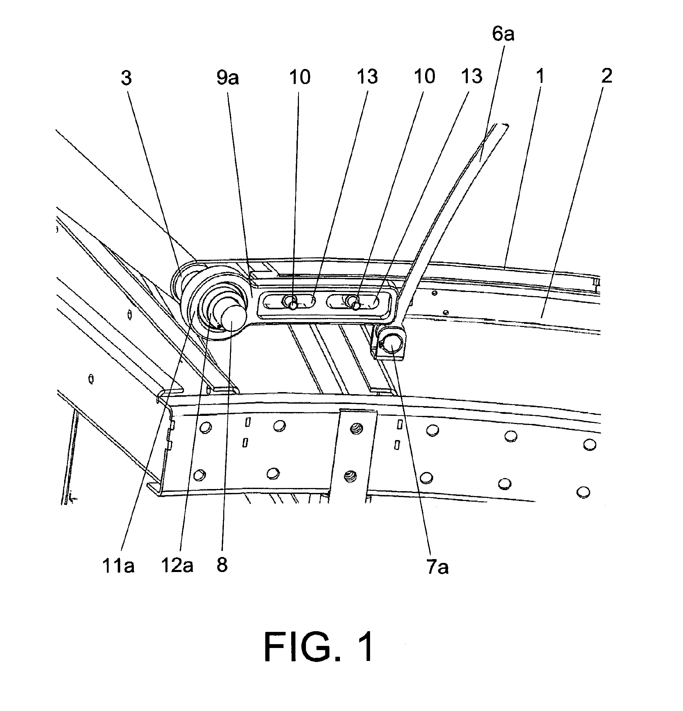

Figure 1 shows a partial perspective view of the interior end of a curved conveyor belt, wherein the interior mobile support can be observed with the manual actuation articulated lever in loosened position.

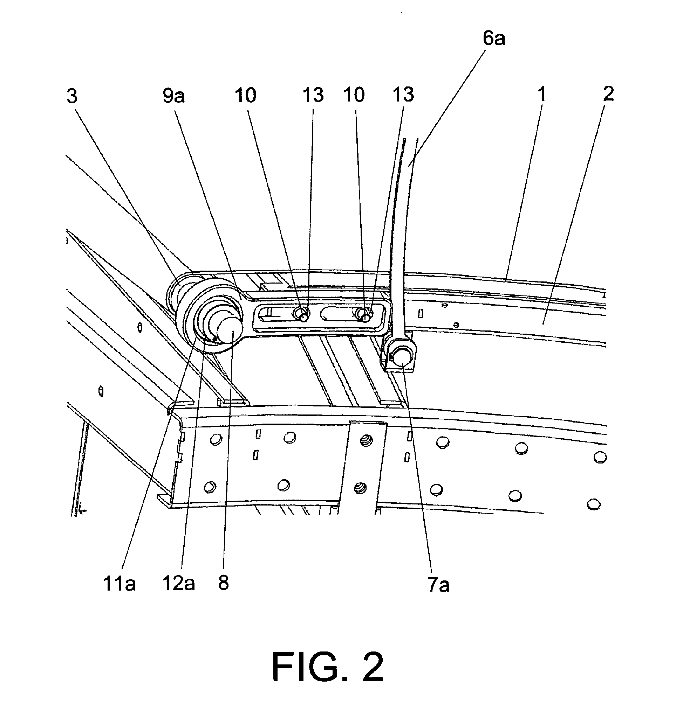

Figure 2 shows a perspective view similar to the previous one, but with the interior mobile support displaced longitudinally due to the manual actuation of the lever in tightened position.

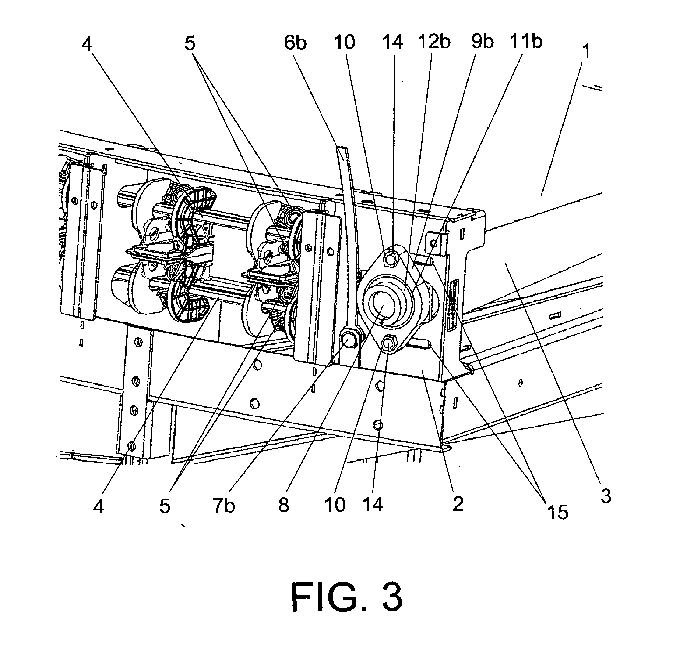

Figure 3 shows a partial perspective view of the exterior end of the curved conveyor belt, wherein the exterior mobile support can be observed with the manual actuation articulated lever in loosened position.

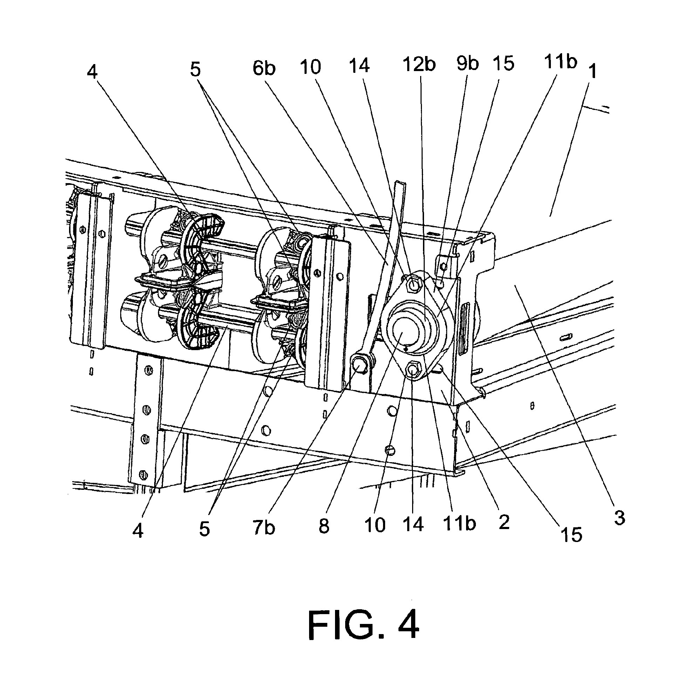

Figure 4 shows a perspective view similar to the previous one, but with the exterior mobile support displaced longitudinally due to the manual actuation of the lever in tightened position.

### PREFERRED EMBODIMENT OF THE INVENTION

In view of the figures, a mode of preferred embodiment of the device for tightening and releasing conveyor belts which constitute the object of this invention is described below. This mode of preferred embodiment has been applied to a conveyor belt with a curved configuration, given that its geometry is more complex when implementing a device for tightening and releasing the conveyor belt for its replacement.

As can be observed in the different figures, the conveyor belt (1) is mounted on a frame (2) of equal geometric configuration, provided with two rollers, one motorized, which has not been represented in the drawings as it is disposed on the opposite end of the conveyor belt (1), and another driven (3) whereon the tightening and releasing device object of the present invention acts. The conveyor belt (1) slides on said end rollers for the transportation of the articles placed thereon, or coming from other conveyor belt. The conveyor belt (1) is guided, through a peripheral protuberance (4) disposed on the exterior end thereof, by retention bearings (5) disposed on the exterior perimeter of the frame (2).

As we have previously indicated, due to the elastic nature of the conveyor belt (1), a tightening thereof is necessary, both for its correct operation and for its placement and adjustment. Likewise, its loosening and removal are necessary to proceed with its replacement in the event of wear or breakage.

Given that said maintenance and repair operations must be carried out in as short a time as possible, the device for tightening and releasing the conveyor belt (1) comprises a set of removable manual actuation levers (6a, 6b), articulated, from its lower end to the respective lateral structures of the frame (2). The articulation point (7a, 7b) of the levers (6a, 6b) is situated underneath the axial shaft (8) of the driven roller (3), so that the levers (6a, 6b) actuate on the respective ends of the axial shaft (8), through their respective mobile supports (9a, 9b), which will be explained below. Therefore, by manually actuating the levers (6a, 6b), we will displace the driven roller (3) axle (8) by tightening the conveyor belt (1), without a greater difficulty or more obstacles, given that the levers (6a, 6b) emerge above the conveyor belt so that they can be actuated comfortably.

Said levers, in order not to hinder the replacement of the belt, are removable, and are provided with ratchets on their articulation axles (7a, 7b), not represented in the drawings, in order to prevent the backward movement thereof during the tightening operation.

In order to ensure and fasten the driven roller (3) axle (8) in the tightened position, the mobile supports (9a, 9b) have tightening screws (10) to immobilize them against the frame (2), disposed in transversal position with respect to the lateral structures of the frame (2), so that the operator can handle them easily from the exterior.

The removal of the conveyor belt (1) for its replacement must be carried out laterally from its interior end, so the interior mobile support (1) is made up of one piece, equipped at its end with an orifice (11a) equipped with a bearing (12a), for the coupling of the interior end of the driven roller (3) axle (8), as well as two elongated orifices (13), wherein the tightening screws (10) operate on the frame (2). The elongated orifices (13) act as horizontal displacement guides of the mobile support (9a) to tighten the conveyor belt (1). The smaller size and geometric configuration of this mobile support (9a) do not hinder the removal of the conveyor belt (1).

On the other hand, the exterior mobile support (9b) is made up of an oval piece equipped with a central orifice (11b) provided with a bearing (12b) for the coupling of the exterior end of the driven roller (3) axle (8), as well as two end orifices (14), wherein the tightening screws (10) which move on slots (15) made on the frame (2) act. These slots (15) act as horizontal displacement guides of the mobile support (9b) for the tightening of the conveyor belt (1).

Finally, it should be pointed out that the articulated levers (6a, 6b) comprise a curved span, of curvature combined with the curve of the contact area of the mobile support (9a, 9b), to reduce friction and facilitate horizontal movement.

## Claims

1. Device for tightening and releasing conveyor belts (1) made up of a frame (2) which comprises two end roller tracks, one motorized and the other driven (3), whereon the conveyor belt (1) slides, duly guided, **characterized in that** the tightening and releasing device comprises a set of manual actuation levers (6a, 6b), articulated from their lower ends to each one of the sides of the frame (2) at a point (7a, 7b) situated underneath the respective ends of the driven roller (3) axle (8), whose levers (6a, 6b) act on the respective ends of the driven roller (3) axle (8), through mobile supports (9a, 9b) designed to slide horizontally.

2. Device for tightening and releasing conveyor belts (1), according to claim 1, **characterized in that** the mobile supports (9a, 9b) of the ends of the driven roller (3) axle (8) comprise at least two tightening screws (10) for fastening the mobile supports (9a, 9b) and therefore of the driven roller (3), in the position desired, whose tightening screws (10) are disposed transversally with respect to the frame (2) for its easy handling from the exterior.

3. Device for tightening and releasing conveyor belts (1), according to claim 1, **characterized in that** the articulated levers (6a, 6b) are removable.

4. Device for tightening and releasing conveyor belts (1), according to claim 1, **characterized in that** the articulation axle (7a, 7b) of the lever comprises a ratchet to prevent the backward movement of the lever (6a, 6b) during the tightening operation.

5. Device for tightening and releasing conveyor belts (1), according to claims 1 and 2, **characterized in that** the mobile support (9a) of the interior end of the driven roller (3) axle (8) is made up of a piece equipped with an orifice (11 a) at its end provided with a bearing (12b) whereon the interior end of the driven roller (3) axle (8) is coupled, having provided for the disposition of two elongated orifices (13), wherein tightening screws (10) operate on the frame (2) for the horizontal movement and fastening of the mobile support (9a).

6. Device for tightening and releasing conveyor belts (1), according to claims 1 and 2, **characterized in that** the mobile support (9b) of the exterior end of the driven roller (3) axle (8) is made up of a piece equipped with a central orifice (11b) at its end provided with a bearing (12b) whereon the exterior end of the driven roller (3) axle (8) is coupled, having provided for the disposition of two end orifices (14), wherein tightening screws (10) which move on horizontal slots (15) made in the frame (2) operate for the horizontal movement and fastening of the mobile support (9b).

7. Device for tightening and releasing conveyor belts (1), according to claim 1, **characterized in that** the articulated levers (6a, 6b) comprise a curved span, of curvature combined with the curve of the contact area of the mobile support (9a, 9b).
